# EUROPÄISCHE PATENTSCHRIFT

(11) **EP 2 489 792 B1**
(45) Veröffentlichungstag und Bekanntmachung des Hinweises auf die Patenterteilung: **16.09.2015**
(21) Anmeldenummer: 11009578.3
(22) Anmeldetag: 05.12.2011
(51) Int. Cl.: E03C 1/04, F16K 11/078

(54) **Sanitärarmatur mit einem Abdeckelement zum Schutz einer Steuerpatrone**
Sanitary fitting with a cover element for protecting a control cartridge
Armature sanitaire dotée d'un élément de recouvrement destiné à la protection d'une cartouche de commande

(30) Priorität: 16.02.2011 CH 2722011
(43) Veröffentlichungstag der Anmeldung: 22.08.2012
(73) Patentinhaber: Franke Water Systems AG, 5726 Unterkulm (CH)
(72) Erfinder: Leutwyler, André, 5734 Reinach (CH); Gautschi, Christian, 5734 Reinach (CH)
(74) Vertreter: Schaad, Balass, Menzl & Partner AG

(56) Entgegenhaltungen:
- EP-A2- 0 982 441
- EP-A2- 1 219 878
- DE-A1- 3 120 171
- DE-A1- 10 038 391
- DE-A1-102005 040 160

## Beschreibung

Die vorliegende Erfindung betrifft eine Sanitärarmatur gemäss dem Oberbegriff des Patentanspruchs 1.

Der der Erfindung nächstkommende Stand der Technik ist das Dokument EP 0 982 441 A1. Es offenbart einen sanitären Einhebelmischer umfassend einen Gehäusekörper, der eine zu seiner oberen Stirnseite hin offene Aufnahmeöffnung aufweist. In der Aufnahmeöffnung des Gehäusekörpers befindet sich eine Steuereinheit, deren Stellhebel nach oben ragt. Über der oberen Stirnseite des Gehäusekörpers ist ein Mischerhebel angeordnet, der einen mit dem Stellhebel verbundenen Befestigungsabschnitt aufweist. Eine unterhalb des Mischerhebels befindliche starre Schutzkappe deckt die Aufnahmeöffnung des Gehäusekörpers nach oben ab. Die starre Schutzkappe weist eine Öffnung auf, durch welche sich der Befestigungsabschnitt des Mischerhebels und/oder der Stellhebel der Steuereinheit hindurch erstreckt. Die Öffnung der starren Schutzkappe ist durch eine flexible Manschette verkleinert. Letztere weist eine kleinere Öffnung auf, durch welche sich der Befestigungsabschnitt des Mischerhebels und/oder der Stellhebel der Steuereinheit hindurch erstreckt.

Dokument EP 1 219 878 A2 offenbart einen Hebelhahn, der einen stationären Körper mit einer Schutzkappe am Ende des Körpers sowie einen Hebel umfasst. Der Hebel ist in Bezug auf ein Gelenk schwenkbar und um seine Achse herum drehbar. Am Hebel ist ein Griff vorgesehen und der Hebel hat eine gleichzeitig bewegbare sowie aus einer elastischen Gummi- oder Kunststoffschicht hergestellte Dichtung. Die Schutzkappe des Körpers weist eine kugelförmig gebogene Oberfläche auf, und der Hebel weist eine das Ende des Körpers abdeckende Wölbung auf, wobei ein unterer Rand der Wölbung sich während der Handhabung des Hebels auf der gebogenen Oberfläche der Schutzkappe entlang bewegt, und wobei der ringförmige Kragen der Dichtung dazu angepasst ist, entlang der gebogenen Oberfläche der Schutzkappe zu gleiten, um einen Spielraum zwischen dem Ende des Körpers und dem Hebel abzudichten.

Eine weitere Sanitärarmatur ist aus dem Dokument EP 0 061 562 B1 bekannt. Die Sanitärarmatur weist eine, in einem Endbereich eines Armaturengehäuses angeordnete, eine Längsachse definierende Steuerpatrone auf und ist an einem diesseitigen Ende des Armaturengehäuses von einer Armaturenkappe abgedeckt. Die Armaturenkappe weist einen Durchlass auf, durch welchen hindurch ein um eine rechtwinklig zur Längsachse verlaufende Schwenkachse schwenkbarer Betätigungsschaft, als Teil der Steuerpatrone, mit einem ausserhalb der Armaturenkappe angeordneten Betätigungshebel verbunden ist.

Ein Problem bei Sanitärarmaturen dieser Art ist der wenig geschützte Zugang von Verunreinigungen in das Innere der Steuerpatrone, da der Durchlass in der Armaturenkappe zusammen mit einem notwendigen Spalt zwischen der Armaturenkappe und dem Betätigungshebel den Zugang in das Innere der Steuerpatrone erlaubt. Der notwendige Spalt verhindert zwar das Verkratzen der Armaturenkappe beim Betätigen des Betätigungshebels in eine Offen- oder Schliessstellung der Steuerpatrone, hingegen wird das Eindringen von Verunreinigungen in das Innere der Steuerpatrone durch den notwendigen Spalt und den Durchlass in der Armaturenkappe ermöglicht. Insbesondere an viel frequentierten Orten, wie beispielsweise in öffentlichen Gebäuden oder in der Industrie, kommen üblicherweise für die Reinigung von Sanitärarmaturen starke Reinigungsmittel zum Einsatz. Diese starken Reinigungsmittel können in die Steuerpatrone eindringen und dort zu Beschädigungen führen.

Es ist daher eine Aufgabe der vorliegenden Erfindung, eine gattungsgemässe Sanitärarmatur derart weiterzubilden, dass auch bei der Reinigung mit starken Reinigungsmitteln die Betriebssicherheit sichergestellt ist.

Diese Aufgabe wird mit einer Sanitärarmatur gelöst, welche die Merkmale des Patentanspruchs 1 aufweist.

Die Sanitärarmatur gemäss dem Patentanspruch 1 weist eine, in einem Endbereich eines Armaturengehäuses angeordnete, eine Längsachse definierende Steuerpatrone auf. Die Steuerpatrone und ein diesseitiges Ende des Armaturengehäuses sind von einer Armaturenkappe überdeckt. Die Armaturenkappe weist einen Durchlass auf, durch welchen hindurch ein um eine rechtwinklig zur Längsachse verlaufende Schwenkachse schwenkbarer Betätigungsschaft der Steuerpatrone mit einem ausserhalb der Armaturenkappe angeordneten Betätigungshebel verbunden ist. Ein erfindungsgemässes verformbares, ringförmiges Abdeckelement ist mit einem, der Steuerpatrone zugewandten ersten Rand an einem an der Steuerpatrone angeordneten Tragring befestigt und umgreift mit einem zweiten Rand den Betätigungsschaft oder ein auf diesem sitzendes Verbindungselement dichtend. Mittels des Abdeckelementes wird das Eindringen von Verunreinigungen in das Innere der Steuerpatrone verhindert.

Bevorzugt ist das verformbare, ringförmige Abdeckelement gummielastisch, resistent gegen Reinigungsmittel und aus einem vernetzten thermoplastischen Elastomer auf Olefinbasis (TPE-V), auch als TPV bekannt, gefertigt und vorwiegend ein Verbund aus Polypropylen (PP) und Ethylen-Propylen-Dien-Kautschuk (EPDM). Des Weiteren ist das Abdeckelement bevorzugt haubenartig ausgebildet. Zudem ist das Abdeckelement vorzugsweise als dünne, flexible und reissfeste Membrane ausgebildet.

Bei einer weiteren Ausführungsform weist die Steuerpatrone mindestens ein in Richtung zur Armaturenkappe vorstehendes Halteelement, vorzugsweise einen Federfinger, auf, mittels welchem der Tragring gehalten ist.

Mittels des Federfingers ist eine einfache Montage des Tragrings möglich. Zur Befestigung des Tragrings ist es selbstverständlich auch denkbar, mehrere Federfinger zu verwenden, die den Tragring in der gewünschten Position halten.

Bei einer weiteren Ausführungsform ist der Betätigungsschaft um die Längsachse drehbar.

Dies erlaubt eine Kombination einer Drehbewegung und einer Schwenkbewegung des Betätigungsschaftes. Üblicherweise wird durch die Drehbewegung des Betätigungsschaftes die Temperatur des aus der Sanitärarmatur auslaufenden Wassers eingestellt und durch die Schenkbewegung des Betätigungsschaftes wird üblicherweise der Wasserdurchfluss gesteuert.

Bei einer weiteren Ausführungsform sind das Halteelement und der Tragring zusammen mit dem Betätigungsschaft um die Längsachse drehbar.

Dies hat den Vorteil, dass ein Verdrehen des verformbaren, ringförmigen Abdeckelementes in eingebautem Zustand verhindert wird.

Bei einer weiteren Ausführungsform ist am Tragring ein in Richtung zur Armaturenkappe vorstehender Ringwulst angeformt.

Dies vereinfacht das Befestigen des verformbaren, ringförmigen Abdeckelementes am Tragring und vermittelt zudem letzterem erhöhte Stabilität.

Bei einer weiteren Ausführungsform weist der Ringwulst eine umlaufende Ringnut auf, in welche der erste Rand des Abdeckelementes eingreift.

Dies gibt eine definierte Lage für den ersten Rand des Abdeckelementes vor.

Bei einer weiteren Ausführungsform ist die Ringnut radial aussen offen und vorzugsweise ist der erste Rand des Abdeckelementes als umlaufender Haltewulst ausgebildet.

Dies hat den Vorteil, dass der erste Rand des Abdeckelementes in der Ringnut sicher gehalten wird und auf Grund der Eigenelastizität des umlaufenden Haltewulstes kommt es zu einer zusätzlichen Selbsthalterung.

Bei einer weiteren Ausführungsform ist die Armaturenkappe am Tragring befestigt.

Dies kann beispielsweise durch eine einfache Montage erfolgen. Ein besonderer Vorteil ergibt sich, wenn der Tragring zusammen mit dem Betätigungsschaft um die Längsachse drehbar ist, denn dreht sich auf diese einfache Art und Weise auch die Armaturenkappe automatisch mit.

Bei einer weiteren Ausführungsform weist der Tragring eine aussen liegende Mantelfläche mit mindestens einer Aufnahmeausnehmung auf, in welche eine Haltenase der Armaturenkappe eingreift. Vorzugsweise ist die Haltenase an einem beispielsweise lappenförmigen Befestigungselement der Armaturenkappe angeformt.

Dies bewirkt eine vereinfachte Befestigung der Armaturenkappe am Tragring. Bevorzugt ist die Haltenase gegengleich zur Aufnahmeausnehmung geformt. Dadurch wird eine Verdrehsicherung zwischen dem Tragring und der Armaturenkappe gewährleistet. Falls notwendig kann die Armaturenkappe nur in einer vorbestimmten Richtung auf dem Tragring befestigt werden. Eine entsprechende Anordnung der Aufnahmeausnehmung am Tragring kann sicherstellen, dass die Montage der Armaturenkappe auf dem Tragring nur eine definierte Montagerichtung zulässt.

Bei einer weiteren Ausführungsform ist der Aufnahmeausnehmung, bezüglich dieser radial innen liegend, ein wenigstens annährend in Umfangsrichtung verlaufender Schlitz durch den Tragring zugeordnet, um eine Blattfeder auszubilden.

Dies ermöglicht das Zurückweichen und automatische Einschnappen der Aufnahmeausnehmung bei der Montage der Armaturenkappe. Selbstverständlich ist die Montage auch umgekehrt möglich, indem die Haltenase am Tragring angeformt ist und das lappenförmige Befestigungselement die gegengleiche Aufnahmeausnehmung aufweist. Die Federfunktion könnte auch vom Befestigungselement übernommen werden.

Bei einer weiteren Ausführungsform ist der zweite Rand des Abdeckelementes als umlaufender Dichtwulst ausgebildet.

Ein besonderer Vorteil des Materials des Abdeckelementes ist die gummielastische Eigenschaft, so dass sich der Dichtwulst auf Grund von Ziehkräften wieder zusammenzieht und sich entsprechend dichtend anschmiegen kann. Selbstverständlich ist es auch möglich für die Aufnahme des Dichtwulstes eine Nut vorzusehen, welche am Verbindungselement oder am Betätigungsschaft vorliegen könnte.

Bei einer weiteren Ausführungsform sitzt auf dem Betätigungsschaft ein Verbindungselement, an welchem der Betätigungshebel befestigt ist und an dem der zweite Rand des Abdeckelementes dichtend anliegt.

Mittels des Verbindungselementes ist eine schonende und besonders einfache Montage des Betätigungshebels möglich. Auch ist es denkbar, dass das Verbindungselement am Betätigungshebel direkt angeordnet ist bzw. einstückig mit diesem verbunden ist.

Bei einer weiteren Ausführungsform weist der Tragring an seinem radial innen liegenden Rand einen Ringteil auf, welcher in Richtung einerseits gegen die Armaturenkappe und andererseits gegen die Steuerpatrone vorsteht.

Dies erlaubt dem Betätigungsschaft das Durchgreifen durch den Ringteil in Richtung zur Armaturenkappe und die Schwenkbewegung zum Öffnen und Schliessen der Steuerpatrone. Des Weiteren kann das Ringteil an der Steuerpatrone befestigt werden. Der Teil des Ringteils in Richtung gegen die Steuerpatrone wirkt dichtend, so dass das Eindringen von Verunreinigungen in das Innere der Steuerpatrone zusätzlich verhindert wird.

Bei einer weiteren Ausführungsform ist am freien Ende des Federfingers eine Federnase angeformt, welche mit dem der Armaturenkappe zugewandten Ende des Ringteils zusammenwirkt, um den Ringteil an der Steuerpatrone in Anlage zu halten.

Damit ist ein dichtendes Anliegen des Ringteils an die Steuerpatrone sichergestellt.

Weitere Vorteile der vorliegenden Erfindung gehen aus der nachstehenden Beschreibung eines Ausführungsbeispiels hervor, welches an Hand der Zeichnung erläutert wird.

Es zeigen rein schematisch:
- Fig. 1: einen teilweisen Längsschnitt durch einen Teil einer erfindungsgemäßen Sanitärarmatur mit einer in Ansicht dargestellten Steuerpatrone in Offenstellung; und
- Fig. 2: in gleicher Darstellung wie Fig. 1, das Gehäuse der Sanitärarmatur im Längsschnitt und in Ansicht die Steuerpatrone in Schliessstellung.

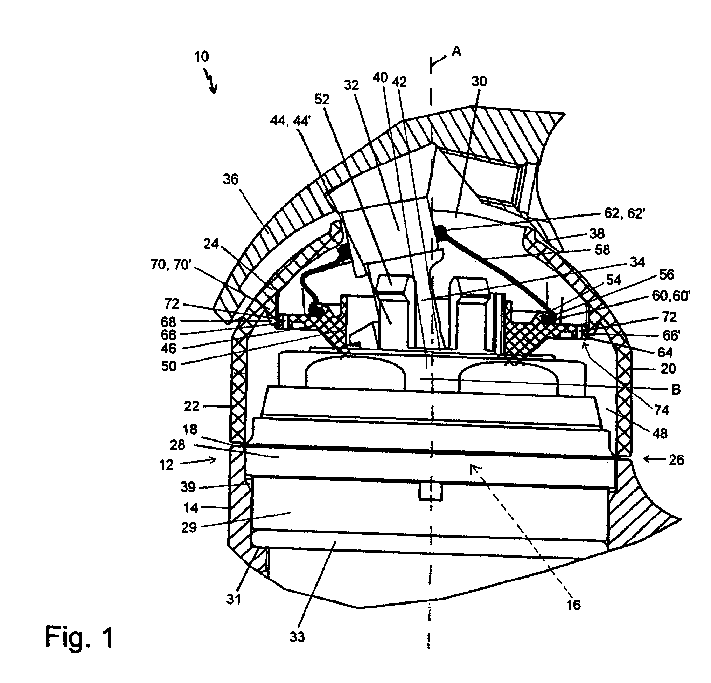

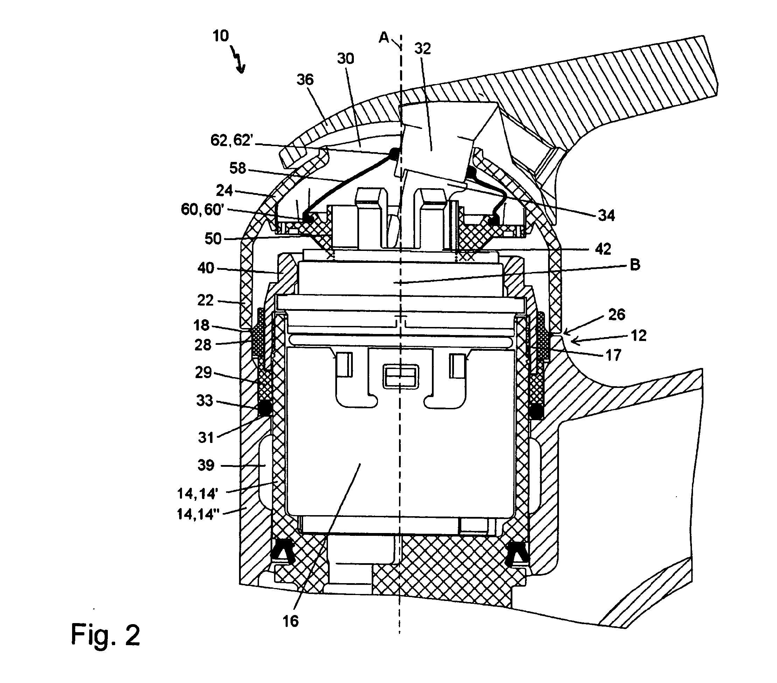

Die in Fig. 1 gezeigte Sanitärarmatur 10 weist in einem Endbereich 12 eines Armaturengehäuses 14 eine Steuerpatrone 16 (nur in Fig. 2 zu sehen, daher ist die Bezugslinie in Fig. 1 gestrichelt gezeichnet) auf, welche eine Längsachse A definiert, und ein diesseitiges Ende 18 des Armaturengehäuses 14 ist von einer Armaturenkappe 20 abgedeckt.

Die in vorliegendem Fall einteilige Armaturenkappe 20 weist einen zylinderförmigen Teil 22 und einen kalottenförmigen Teil 24 auf.

Der zylinderförmige Teil 22 der Armaturenkappe 20 ist vom diesseitigen Ende 18 des Armaturengehäuses 14 über einen dünnen Spalt 26 getrennt. Ein Stützring 28 ist zwischen dem Armaturengehäuse 14 und der Armaturenkappe 20 angeordnet und verhindert das seitliche Eindringen von Verunreinigungen durch den dünnen Spalt 26. Die aussen liegende Oberfläche des zylinderförmigen Teils 22 fluchtet mit der aussen liegenden Oberfläche des Armaturengehäuses 14 beim Ende 18.

Der kalottenförmige Teil 24 der Armaturenkappe 20 weist einen langlochartigen Durchlass 30 auf. In gezeigtem Ausführungsbeispiel ist der langlochartige Durchlass 30 von einem Verbindungselement 32 durchgriffen und das Verbindungselement 32 sitzt fest auf einem Betätigungsschaft 34 der Steuerpatrone 16, wobei der Betätigungsschaft 34 um eine rechtwinklig zur Längsachse A verlaufende Schwenkachse B schwenkbar ist. Ausserhalb der Armaturenkappe 20 ist ein Betätigungshebel 36 am Verbindungselement 32 in bekannter Art und Weise mittels einer Madenschraube befestigt.

In der Offenstellung der Steuerpatrone 16 gemäss Fig. 1 ist der Betätigungshebel 36 nach oben geschwenkt und es fliesst in bekannter Art und Weise Wasser durch die Steuerpatrone 16 mit einem definierten Wasserdurchfluss.

In der Schliessstellung der Steuerpatrone 16 gemäss Fig. 2 ist der Betätigungshebel 36 nach unten geschwenkt und der Wasserdurchfluss durch die Steuerpatrone 16 ist gestoppt.

Grundlegend muss der langlochartige Durchlass 30 der Armaturenkappe 20 die Schwenkbewegung des Betätigungsschaftes 34 in vollem Umfang erlauben, so dass eine einwandfreie Öffnung und Schliessung der Steuerpatrone 16 mittels des Betätigungshebels 36 ausserhalb der Armaturenkappe 20 möglich ist.

Obwohl der Betätigungshebel 36 in jeder Schwenklage den Durchlass 30 der Armaturenkappe 20 vollständig Überdeckt, ist es möglich, dass Verunreinigungen zwischen der Armaturenkappe 20 und dem Betätigungshebel 36 durch einen notwendigen Spalt 38 in das Innere der Steuerpatrone 16 gelangen kann. Der notwendige Spalt 38 verhindert das Verkratzen der Armaturenkappe 20 bei der Schwenkbewegung des Betätigungshebels 36 im Einsatz.

Die in einem Innenraum 39 des Armaturengehäuses 14 angeordnete Steuerpatrone 16 ist in bekannter Art und Weise eingebaut. In vorliegendem Fall besteht das Armaturengehäuse 14, wie in Fig. 2 im Detail dargestellt, aus einem Innengehäuse 14' und einem Aussengehäuse 14''. Das Innengehäuse 14' ist mittels eines Gewindes 17 mit einer Ringmutter 40 verbunden, welche die Steuerpatrone 16 in bekannter Art und Weise im Innenraum 39 des Armaturengehäuses 14 in Position hält. Zwischen der Ringmutter 40 und dem zylinderförmigen Teil 22 der Armaturenkappe 20 sowie dem Aussengehäuse 14'' ist der Stützring 28, wie oben ausgeführt, angeordnet. Zwischen dem Innengehäuse 14' und dem Aussengehäuse 14'' ist ein Gleitring 29 angeordnet, welcher auf einem O-Ring 31 aufliegt. Der O-Ring 31 wiederum liegt auf einer radial innen liegenden Schulter 33 des Aussengehäuses 14'' auf und schützt so zusätzlich den Innenraum 39 des Armaturengehäuses 14 vor Verunreinigungen. Der Gleitring 29 zentriert das am feststehenden Innengehäuse 14' um die Längsachse A drehbare Aussengehäuse 14''.

Der Steuerpatrone 16 ist in Richtung zur Armaturenkappe 20, ein mit dem Betätigungsschaft 34 mitdrehender Ring 42 (in Fig. 2 gestrichelt gezeichnet) angeordnet. Der mitdrehende Ring 42 der Steuerpatrone 16 weist in vorliegendem Fall vier in Richtung zur Armaturenkappe 20 vorstehende Halteelemente 44, welche als Federfinger 44' ausgebildet und parallel zur Längsache A angeordnet sind, auf.

Ein scheibenförmiger Tragring 46 ist in einem von der Armaturenkappe 20 begrenzten Innenraum 48 auf dem mitdrehenden Ring 42 der Steuerpatrone 16 angeordnet und weist an seinem radial innen liegenden Rand ein Ringteil 50 auf, welcher in Richtung einerseits gegen die Armaturenkappe 20 und andererseits gegen die Steuerpatrone 16 vorsteht. Zudem erlaubt der Ringteil 50 das Durchgreifen und Schwenken des Betätigungsschaftes 34 der Steuerpatrone 16.

Die Federfinger 44' sind auf dem mitdrehenden Ring 42 der Steuerpatrone 16 fest angeordnet und durchgreifen den Ringteil 50 des Tragrings 46 in Richtung gegen die Armaturenkappe 20. Am freien Ende der Federfinger 44' ist je eine Federnase 52 angeformt, welche mit dem der Armaturenkappe 20 zugewandten Ende des Ringteils 50 zusammenwirkt, um den Ringteil 50 am mitdrehenden Ring 42 der Steuerpatrone 16 dichtend zu halten.

An dem scheibenförmigen Tragring 46 ist in Richtung zur Armaturenkappe 20 vorstehend ein umlaufender Ringwulst 54 angeformt. Der umlaufende Ringwulst 54 weist eine umlaufende Ringnut 56 auf, welche radial aussen offen ist.

Ein verformbares, ringförmiges Abdeckelement 58 ist vorzugsweise gummielastisch, haubenartig und als dünne, flexible sowie reissfeste Membrane ausgebildet. Das Abdeckelement 58 weist einen ersten Rand 60, welcher der Steuerpatrone 16 zugewandt und vorzugsweise als Haltewulst 60' ausgebildet ist, und einen radial innen liegenden zweiten Rand 62 auf, welcher vorzugsweise als Dichtwulst 62' ausgebildet ist. Auf Grund der Eigenelastizität des gummielastischen Materials, welches vorzugsweise aus TPE-V bzw. TPV gefertigt ist, wird der Haltewulst 60' des ersten Randes 60 des Abdeckelementes 58 in der umlaufenden Ringnut 56 des Ringwulstes 54 des Tragrings 46 selbsttätig gehalten und zieht sich der umlaufende Dichtwulst 62' des zweiten Randes 62 des Abdeckelementes 58 zusammen und schmiegt sich entsprechend umfangsseitig am Verbindungselement 32 dichtend an.

Selbstverständlich ist es auch denkbar, dass der umlaufende Dichtwulst 62' des zweiten Randes 62 des Abdeckelementes 58 am Betätigungsschaft 34 selbst anliegt oder dass das Verbindungselement 32 eine umlaufende Nut (nicht gezeigt) aufweist, an welcher der umlaufende Dichtwulst 62' eingreift.

Wie aus den Fig. 1 und 2 ersichtlich, ist das verformbare, ringförmige Abdeckelement 58 bei jeder Schwenkbewegung des Betätigungsschaftes 34 ungespannt eingebaut. Dies hat den Vorteil, dass das Abdeckelement 58 nie unter Spannung steht und somit auch nicht die Gefahr des Zerreissens oder des Verlierens des Halts besteht.

Die Armaturenkappe 20 ist im gezeigten Ausführungsbeispiel am Tragring 46 befestigt. Dazu weist der Tragring 46 eine radial aussen liegende Mantelfläche 64 mit mindestens einer Aufnahmeausnehmung 66, vorzugsweise sechs Ausnehmungen, auf. Bevorzugt sind zwei Aufnahmeausnehmungen 66, 66' diametral gegenüberliegend angeordnet. Es ist jedoch auch denkbar, mehr als zwei Aufnahmeausnehmungen 66, 66', 66'' (dritte nicht gezeigt) vorzusehen, so dass eine eindeutige Zuordnung und Montagerichtung bei der Befestigung der Armaturenkappe 20 am Tragring 46 möglich ist.

Eine Haltenase 68 der Armaturenkappe 20, welche nach radial innen zeigt, greift in die Aufnahmeausnehmung 66 des Tragrings 46 ein, und ist an einem Befestigungselement 70, welches hier als Befestigungslappen 70' ausgeführt ist, der Armaturenkappe 20 angeformt.

Der Aufnahmeausnehmung 66 des Tragrings 46 ist, bezüglich dieser radial innen liegend, ein wenigstens annährend in Umfangsrichtung verlaufender (in seiner Länge begrenzten) Schlitz 72 durch den Tragring 46 zugeordnet, so dass der die Aufnahmeausnehmung 66 tragende Teil des Tragrings 46 eine Blattfeder 74 ausbildet. Entsprechend ist die Montage der Armaturenkappe 20 auf den Tragring 46 sehr einfach, denn beim Zusammenwirken der Haltenase 68 der Armaturenkappe 20 mit der Aufnahmeausnehmung 66 des Tragrings 46 weicht die Blattfeder 74 nach radial innen zurück und durch die Rückstellkraft der Blattfeder 74 kommt es zum Schnappverschluss zwischen der Armaturenkappe 20 und dem Tragring 46.

Es ist auch möglich, den Tragring 46 fest an der Steuerpatrone 16 anzuordnen. Dies insbesondere dann, wenn der Betätigungsschaft 34 nur schwenkbar, jedoch nicht drehbar ist.

## Patentansprüche

1. Sanitärarmatur mit einem Armaturengehäuse (14), einer in einem Endbereich (12) des Armaturengehäuses (14) angeordneten, eine Längsachse (A) definierenden Steuerpatrone (16) und einer ein diesseitiges Ende (18) des Armaturengehäuses (14) abdeckenden Armaturenkappe (20), wobei die Armaturenkappe (20) einen Durchlass (30) aufweist, durch welchen hindurch ein um eine rechtwinklig zur Längsachse (A) verlaufende Schwenkachse (B) schwenkbarer Betätigungsschaft (34) der Steuerpatrone (16) mit einem ausserhalb der Armaturenkappe (20) angeordneten Betätigungshebel (36) verbunden ist, wobei der Betätigungsschaft (34) um die Längsachse (A) drehbar ist, und wobei ein verformbares, ringförmiges Abdeckelement (58) vorgesehen ist, welches mit einem der Steuerpatrone (16) zugewandten ersten Rand (60) an einem an der Steuerpatrone (16) angeordneten Tragring (46) befestigt ist und mit einem zweiten Rand (62) den Betätigungsschaft (34) oder ein auf diesem sitzendes Verbindungselement (32) dichtend umgreift, um das Eindringen von Verunreinigungen in das Innere der Steuerpatrone (16) zu verhindern, **dadurch gekennzeichnet, dass** der Tragring (46) zusammen mit dem Betätigungsschaft (34) um die Längsachse (A) drehbar ist.

2. Sanitärarmatur nach Anspruch 1, **dadurch gekennzeichnet, dass** die Steuerpatrone mindestens ein in Richtung zur Armaturenkappe (20) vorstehendes Halteelement (44), vorzugsweise einen Federfinger (44') zum Halten des Tragrings (46), aufweist.

3. Sanitärarmatur nach Anspruch 2, **dadurch gekennzeichnet, dass** das Halteelement (44) und der Tragring (46) zusammen mit dem Betätigungsschaft (34) um die Längsachse (A) drehbar sind.

4. Sanitärarmatur nach einem der Ansprüche 1 bis 3, **dadurch gekennzeichnet, dass** am Tragring (46) ein in Richtung zur Armaturenkappe (20) vorstehender Ringwulst (54) angeformt ist.

5. Sanitärarmatur nach Anspruch 4, **dadurch gekennzeichnet, dass** der Ringwulst (54) eine umlaufende Ringnut (56) aufweist, in welche der erste Rand (60) des Abdeckelementes (58) eingreift.

6. Sanitärarmatur nach Anspruch 5, **dadurch gekennzeichnet, dass** die Ringnut (56) radial aussen offen ist und vorzugsweise der erste Rand (60) des Abdeckelementes (58) als umlaufender Haltewulst (60') ausgebildet ist.

7. Sanitärarmatur nach einem der Ansprüche 1 bis 6, **dadurch gekennzeichnet, dass** die Armaturenkappe (20) am Tragring (46) befestigt ist.

8. Sanitärarmatur nach einem der Ansprüche 1 bis 7, **dadurch gekennzeichnet, dass** der Tragring eine aussen liegende Mantelfläche (64) mit mindestens einer Aufnahmeausnehmung (66) aufweist, in welche eine Haltenase (68) der Armaturenkappe (20) eingreift und vorzugsweise die Haltenase (68) an einem Befestigungselement (70) der Armaturenkappe (20) angeformt ist.

9. Sanitärarmatur nach Anspruch 8, dadurch gekenntzeichnet, **dass** der Aufnahmeausnehmung (66), bezüglich dieser radial innen liegend, ein wenigstens annährend in Umfangsrichtung verlaufender Schlitz (72) durch den Tragring (46) zugeordnet ist, um eine Blattfeder (74) auszubilden.

10. Sanitärarmatur nach einem der Ansprüche 1 bis 9, **dadurch gekennzeichnet, dass** der zweite Rand (62) des Abdeckelementes (58) als umlaufender Dichtwulst (62') ausgebildet ist.

11. Sanitärarmatur nach einem der Ansprüche 1 bis 10, **dadurch gekennzeichnet, dass** auf dem Betätigungsschaft (34) ein Verbindungselement (32) sitzt, an welchem der Betätigungshebel (36) befestigt ist und an dem der zweite Rand (62) des Abdeckelementes (58) dichtend anliegt.

12. Sanitärarmatur nach einem der Ansprüche 1 bis 11, **dadurch gekennzeichnet, dass** der Tragring (46) an seinem radial innen liegenden Rand einen Ringteil (50) aufweist, welcher in Richtung einerseits gegen die Armaturenkappe (20) und andererseits gegen die Steuerpatrone (16) vorsteht.

13. Sanitärarmatur nach Anspruch 2 und 12, **dadurch gekennzeichnet, dass** am freien Ende des Federfingers (44') eine Federnase (52) angeformt ist, welche mit dem der Armaturenkappe (20) zugewandten Ende des Ringteils (50) zusammenwirkt, um den Ringteil (50) an der Steuerpatrone (16) zu halten.

## Claims

1. A sanitary fitting comprising a fitting housing (14), a control cartridge (16) which is arranged in an end region (12) of a fitting housing (14) and defines a longitudinal axis (A), and a fitting cap (20) which covers an end (18), on this side, of the fitting housing (14), the fitting cap (20) having a through-passage (30), through which an actuating shaft (34) of the control cartridge (16) is connected to an actuating lever (36) which is arranged outside the fitting cap (20), said actuating shaft (34) being pivotable about a pivot axis (B) that runs at right angles to the longitudinal axis (A), the actuating shaft (34) being pivotable about the longitudinal axis (A), and a deformable, annular covering element (58) being provided, which is fastened by way of a first rim (60), facing the control cartridge (16), to a support ring (46) arranged on the control cartridge (16), and engages in a sealing manner by way of a second rim (62) around the actuating shaft (34), or a connecting element (32) seated thereon, in order to prevent contaminants from penetrating into the control cartridge (16), **characterized in that** the support ring (46) is rotatable about the longitudinal axis (A) together with the actuating shaft (34).

2. The sanitary fitting as claimed in claim 1, **characterized in that** the control cartridge has at least one retaining element (44) to hold the support ring (46), preferably a spring finger (44'), which projects in the direction of the fitting cap (20).

3. The sanitary fitting as claimed in claim 2, **characterized in that** the retaining element (44) and the support ring (46) are rotatable about the longitudinal axis (A) together with the actuating shaft (34).

4. The sanitary fitting as claimed in one of claims 1 to 3, **characterized in that** an annular bead (54) which projects in the direction of the fitting cap (20) is integrally formed on the support ring (46).

5. The sanitary fitting as claimed in claim 4, **characterized in that** the annular bead (54) has a circumferential annular groove (56), into which the first rim (60) of the covering element (58) engages.

6. The sanitary fitting as claimed in claim 5, **characterized in that** the annular groove (56) is open radially on the outside and preferably the first rim (60) of the covering element (58) is in the form of a circumferential retaining bead (60').

7. The sanitary fitting as claimed in one of claims 1 to 6, **characterized in that** the fitting cap (20) is fastened to the support ring (46).

8. The sanitary fitting as claimed in one of claims 1 to 7, **characterized in that** the support ring has an external shell surface (64) having at least one holding recess (66), into which a retaining lug (68) of the fitting cap (20) engages, and preferably the retaining lug (68) is integrally formed on a fastening element (70) of the fitting cap (20).

9. The sanitary fitting as claimed in claim 8, **characterized in that** a slot (72) through the support ring (46), said slot extending at least approximately in the circumferential direction, is assigned to the holding recess (66), radially on the inside with regard to the latter, in order to form a leaf spring (74).

10. The sanitary fitting as claimed in one of claims 1 to 9, **characterized in that** the second rim (62) of the covering element (58) is in the form of a circumferential sealing bead (62').

11. The sanitary fitting as claimed in one of claims 1 to 10, **characterized in that** a connecting element (32) is seated on the actuating shaft (34), the actuating lever (36) being fastened to and the second rim (62) of the covering element (58) resting in a sealing manner against said connecting element (32).

12. The sanitary fitting as claimed in one of claims 1 to 11, **characterized in that** the support ring (46) has on its radially inner rim an annular part (50) which projects on one side toward the fitting cap (20) and on the other side toward the control cartridge (16).

13. The sanitary fitting as claimed in claims 2 and 12, **characterized in that** a spring lug (52) is integrally formed at the free end of the spring finger (44') and interacts with that end of the annular part (50) that faces the fitting cap (20), in order to retain the annular part (50) against the control cartridge (16).

## Revendications

1. Robinetterie sanitaire comprenant un boîtier de robinetterie (14), une cartouche de réglage (16) disposée dans une zone d'extrémité (12) du boîtier de robinetterie (14) définissant un axe longitudinal (A) et un capuchon de robinetterie (20) recouvrant de ce côté-ci une extrémité (18) du boîtier de robinetterie (14), le capuchon de robinetterie (20) présentant un passage (30), à travers lequel une tige d'actionnement (34) de la cartouche de réglage (16) pivotante autour d'un axe de pivotement (B) s'étendant perpendiculairement à l'axe longitudinal (A) est reliée avec un levier d'actionnement (36) disposé à l'extérieur du capuchon de robinetterie (20), la tige d'actionnement (34) tournant autour de l'axe longitudinal (A), et un élément de couverture (58) déformable et en forme d'anneau étant prévu, lequel est fixé avec un premier bord (60) orienté vers la cartouche de réglage (16) à une bague de support (46) disposée sur la cartouche de réglage (16) et avec un deuxième bord (62) entoure de façon étanche la tige d'actionnement (34) ou un élément de liaison (32) arrangé sur celui-ci, pour empêcher l'infiltration d'impuretés à l'intérieur de la cartouche de réglage (16), **caractérisée en ce que** la bague de support (46) tourne ensemble avec la tige d'actionnement (34) autour de l'axe longitudinal (A).

2. Robinetterie sanitaire selon la revendication 1, **caractérisée en ce que** la cartouche de réglage présente au moins un élément de maintien (44) saillant en direction du capuchon de robinetterie (20), de préférence un doigt à ressort (44'), pour tenir la bague de support (46).

3. Robinetterie sanitaire selon la revendication 2, **caractérisée en ce que** l'élément de maintien (44) et la bague de support (46) tournent ensemble avec la tige d'actionnement (34) autour de l'axe longitudinal (A).

4. Robinetterie sanitaire selon l'une des revendications 1 à 3, **caractérisée en ce qu'**un bourrelet annulaire (54) saillant en direction du capuchon de robinetterie (20) est façonné sur la bague de support (46).

5. Robinetterie sanitaire selon la revendication 4, **caractérisée en ce que** le bourrelet annulaire (54) présente une rainure annulaire (56) périphérique, dans laquelle le premier bord (60) de l'élément de couverture (58) est engagé.

6. Robinetterie sanitaire selon la revendication 5, **caractérisée en ce que** le la rainure annulaire (56) est ouverte radialement vers l'extérieur et de préférence le premier bord (60) de l'élément de couverture (58) est façonné comme un bourrelet de maintien (60') périphérique.

7. Robinetterie sanitaire selon l'une des revendications 1 à 6, **caractérisée en ce que** le capuchon de robinetterie (20) est fixé à la bague de support (46).

8. Robinetterie sanitaire selon l'une des revendications 1 à 7, **caractérisée en ce que** la bague de support présente une enveloppe extérieure (64) avec au moins un évidement de réception (66), dans lequel un ergot de maintien (68) du capuchon de robinetterie (20) est engagé et de préférence l'ergot de maintien (68) est façonné sur un élément de fixation (70) du capuchon de robinetterie (20).

9. Robinetterie sanitaire selon la revendication 8, **caractérisée en ce qu'**une fente (72) à travers la bague de support (46), s'étendant au moins approximativement dans une direction circonférentielle, est associée à l'évidement de réception (66), radialement à l'intérieur par rapport à ce dernier, pour former un ressort à lames (74).

10. Robinetterie sanitaire selon l'une des revendications 1 à 9, **caractérisée en ce que** le deuxième bord (62) de l'élément de couverture (58) est façonné comme un bourrelet d'étanchéité (62') périphérique.

11. Robinetterie sanitaire selon l'une des revendications 1 à 10, **caractérisée en ce qu'**un élément de liaison (32) est arrangé sur la tige d'actionnement (34), auquel le levier d'actionnement (36) est fixé et auquel le deuxième bord (62) de l'élément de couverture (58) est ajusté de façon étanche.

12. Robinetterie sanitaire selon l'une des revendications 1 à 11, **caractérisée en ce que** la bague de support (46) présente une partie de bague (50) à son bord situé radialement à l'intérieur, laquelle est en saillie en direction d'une part du capuchon de robinetterie (20) et d'autre part de la cartouche de réglage (16).

13. Robinetterie sanitaire selon les revendications 2 et 12, **caractérisée en ce que** un ergot à ressort (52) est façonné à l'extrémité libre du doigt à ressort (44'), lequel coopère avec l'extrémité de la partie de bague (50) orientée vers le capuchon de robinetterie (20) pour tenir la partie de bague (50) à la cartouche de réglage (16).
